# EUROPÄISCHE PATENTANMELDUNG

(11) **EP 1 786 175 A1**
(43) Veröffentlichungstag der Anmeldung: **16.05.2007**
(21) Anmeldenummer: 05024853.3
(22) Anmeldetag: 14.11.2005
(51) Int. Cl.: H04L 29/12

(54) **Offene Adressvergabe für ein IO-System**

(71) Anmelder: SIEMENS AKTIENGESELLSCHAFT, 80333 München (DE)
(72) Erfinder: Herberth, Harald, 90522 Oberasbach (DE)

(57) **Zusammenfassung**

Die Erfindung betrifft ein Verfahren zur Adressvergabe unter Nutzung von DHCP, die für ein IO-System vergeben werden. Eine Steuerung (4) beantragt die Adressen für sich und für alle von ihr verwalteten IO-Geräte (1) am DHCP-Server (3). Die IO-Geräte (1) beziehen ihre Adresse von der Steuerung (4).

## Beschreibung

Die Erfindung betrifft ein Verfahren zur Adressvergabe unter Nutzung von DHCP für ein IO-System mit mehreren IO-Geräten, wobei IP-Adressen von einem **D**ynamic **H**ost **C**onfiguration **P**rotocoll-(DHCP)-Server vergeben werden und wobei eine Steuerung, z.B. eine **C**entral **P**rocessing **U**nit (CPU) mit dem DHCP-Server kommuniziert, um die IP-Adressen während des Betriebs zu bestätigen.

Derartige IO-Systeme sind bekannt, z.B. das von Siemens benutzte PROFINET-IO-System, bei dem jede CPU und jedes IO-Gerät jeweils eine IP-Adresse benötigt. Die Verwaltung und Vergabe dieser Adressen stellt eine organisatorische Herausforderung dar, die insbesondere bei einer hohen Anzahl von IO-Geräten nicht vernachlässigbar ist. Diese Erfindungsmeldung schlägt ein Verfahren vor, bei dem die Verwaltung der IP-Adressen in bestehende Systeme und Verfahren integriert werden kann, ohne den technischen Aufwand in jedes IO-Gerät zu verlagern, und ohne Nachteile beim Hochlaufverhalten einer CPU zuhaben. Bei heutigen Systemen der SIMATIC-Produktfamilie von Siemens wird die IP-Adressvergabe durch eine Steuerung durchgeführt. Die CPU und jedes IO-Gerät erhält dabei eine IP-Adresse zugewiesen. Diese Information wird in die CPU geladen, die dann die IP-Adressen im Anlauf an die 10-Geräte weiterverteilt.

Der Projekteur muss sich mit dem Netz-Administrator abstimmen, damit er die richtigen IP-Adressen verwendet, der Netz-administrator muss sicherstellen, dass diese Adressen nicht weiterverwendet werden. Bekannterweise setzt der Netzadministrator DHCP ein, um an einem zentralen Server die Zuordnung von IP-Adressen zu Netzteilnehmern zu verwalten. Daher existiert die Anforderung, DHCP bei der Konfiguration von IO-Geräten ebenfalls einzusetzen. Allerdings ist beim Einsatz von DHCP für jedes IO-Gerät neben der technischen Komplexität vor allem das zentrale Hochlaufverhalten ein Problem. Verwenden die IO-Geräte DHCP, so muss in der ersten Phase die Adressvergabe zwischen IO-Geräten und DHCP-Server ablaufen und dann in der zweiten Phase die restliche Initialisierung und der Betrieb des IO-Gerätes durch die CPU. Auch während des Betriebs müssten die IO-Geräte mit dem DHCP-Server kommunizieren, um ihre IP-Adresse weiterhin zu bestätigen.

Der Erfindung liegt die Aufgabe zugrunde, das oben genannte Verfahren dahingehend zu verbessern, da sich eine klare Master-Slave-Zuordnung der IO-Geräte zur Steuerung ergibt, da in diesem Fall die IO-Geräte ausschließlich von der Steuerung ausgesteuert und konfiguriert werden.

Die Aufgabe wird dadurch gelöst, dass die Steuerung für sich und für alle von ihr verwalteten IO-Geräte eine IP-Adresse beantragt und die IO-Geräte diese von der Steuerung beziehen. Hierdurch ergibt sich ein weiterer Vorteil. Die verschiedenen Mechanismen der IP-Adressvergabe konzentrieren sich auf unterschiedliche Verfahren in der Steuerung. IO-Geräte müssen nicht mehrere Mechanismen der IP-Adressvergabe implementieren.

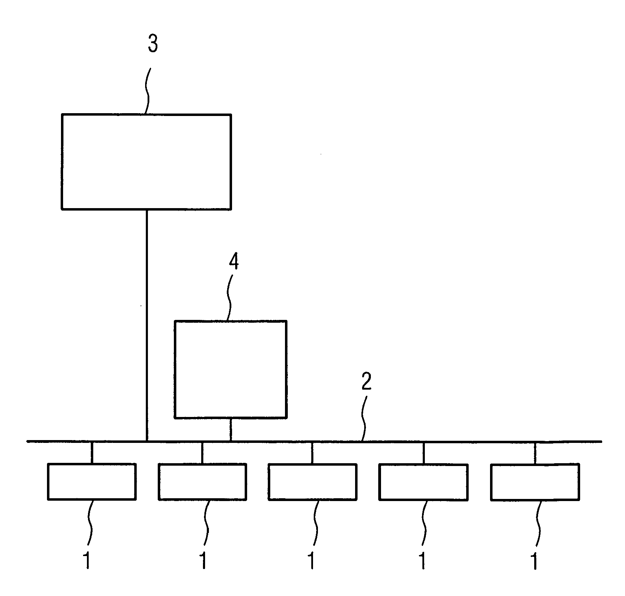

Anhand der Zeichnung wird das erfindungsgemäße Verfahren näher erläutert.

In der Zeichnung ist ein IO-System mit mehreren IO-Geräten 1 dargestellt, die über eine Busleitung 2, z.B. einen Ethernet-Bus, an einen **D**ynamic **H**ost **C**onfiguration **P**rotocoll-(DHCP)-Server 3 und an eine Steuerung 4 angeschlossen sind.

DHCP ist ein IP-Standard, mit dem die Komplexität der Verwaltung von Adresskonfigurationen vermindert wird, indem die Verwaltung von IP-Adressen und weiterer damit zusammenhängender Details bei der Konfiguration zentral über einen Server im Netwerk erfolgt.

Die IP-Adressvergabe erfolgt unter Nutzung von DHCP, wobei der DHCP-Server 3 die IP-Adressen für die Steuerung 4 und für jedes IO-Gerät 1 vergibt und diese Information an die Steuerung 4 auf Anfrage derselben weiterleitet. Die Verteilung der IP-Adressen erfolgt dann durch die Steuerung 4 an die IO-Geräte 1.

Das hier vorgeschlagene Verfahren kombiniert die IP-Adressvergabe mit Hilfe eines DHCP-Servers 3 mit den Vorteilen der zentralen Adresskonfiguration der IO-Geräte 1 durch die Steuerung 4.

Die Steuerung 4 tritt als Stellvertreter aller IO-Geräte 1 bezüglich der DHCP-Adressvergabe durch den DHCP-Server 3. Sie beantragt beim DHCP-Server 3 sowohl für sich als auch für alle von ihr verwalteten IO-Geräte 1 eine IP-Adresse und kommuniziert auch weiterhin mit dem DHCP-Server 3, um diese IP-Adressen während des Betriebs zu bestätigen. Die Steuerung 4 kombiniert die Funktionalität eines DHCP-Clients und eines DHCP-Relay-Agent. Die Steuerung 4 führt die Adressinitialisierung der IO-Geräte 1 aus.

Das Verfahren der IP-Adressvergabe erfolgt ausschließlich durch die CPU 4, d.h. die IO-Geräte 1 beziehen ihre IP-Adresse stets von der Steuerung 4.

Die verschiedenen Mechanismen der Adressvergabe konzentrieren sich auf unterschiedliche Verfahren in der Steuerung 4. IO-Geräte 1 müssen nicht mehrere Mechanismen der IP-Adressvergabe implementieren.

Der Hochlauf des IO-Systems bleibt auch unter Nutzung von DHCP zur Adresskonfiguration eine zentrale Angelegenheit zwischen der Steuerung 4 als Master und den IO-Geräten 1 als Slaves.

Die IP-Adresskonfiguration nach dem oben beschriebenen Verfahren lässt sich vorteilhaft in die Verfahren und Werkzeuge integrieren, die standardmäßig bei der Administration von großen IP-Netzen eingesetzt werden.

## Patentansprüche

1. Verfahren zur Adressvergabe unter Nutzung von **D**ynamic **H**ost **C**onfiguration **P**rotocoll (DHCP) für ein IO-System mit mehreren IO-Geräten (1), wobei IP-Adressen von einem DHCP-Server (3) vergeben werden und wobei eine Steuerung (4) mit dem DHCP-Server (3) kommuniziert, um die IP-Adressen während des Betriebs zu bestätigen, **dadurch gekennzeichnet, dass** die Steuerung (4) für sich und für alle von ihr verwalteten IO-Geräte (1) eine IP-Adresse beantragt und die IO-Geräte (1) diese von der Steuerung (4) beziehen.
